# EUROPÄISCHE PATENTANMELDUNG

(11) **EP 3 273 414 A1**
(43) Veröffentlichungstag der Anmeldung: **24.01.2018**
(21) Anmeldenummer: 17166847.8
(22) Anmeldetag: 18.04.2017
(51) Int. Cl.: G07C 3/00

(54) **VERFAHREN ZUM ABSCHÄTZEN EINER ERWARTETEN LEBENSDAUER EINES BAUTEILS EINER MASCHINE**

(30) Priorität: 18.07.2016 DE 102016008750
(71) Anmelder: Liebherr-Werk Nenzing GmbH, 6710 Nenzing (AT)
(72) Erfinder: Jussel, Patrick, 6700 Bludenz (AT); Kocher, Michael, 6832 Sulz (AT)
(74) Vertreter: Laufhütte, Dieter

(57) **Zusammenfassung**

Die vorliegende Erfindung betrifft ein Verfahren zum Abschätzen einer erwarteten Lebensdauer eines Bauteils einer Maschine, wobei in dem Verfahren Prozessdaten der Maschine, die beim Ausführen eines zyklischen Arbeitsschritts durch die Maschine erfasst werden, aufgezeichnet werden, die erfassten Daten an eine Datenbank übertragen werden, die in der Datenbank abgelegten Daten auf Ausfallmuster gemäß einem Ausfallmusterkatalog analysiert werden, um die erwartete Lebensdauer des Bauteils abzuschätzen, und eine Mitteilung bei Auffinden eines erkannten Ausfallmusters in den analysierten Daten ausgegeben wird.

## Beschreibung

Die vorliegende Erfindung betrifft ein Verfahren zum Abschätzen einer erwarteten Lebensdauer eines Bauteils einer Maschine.

Es gibt eine Vielzahl von Maschinen, die dazu ausgelegt sind, eine hohe Anzahl von sich ähnlichen zyklischen Arbeitsschritten zu wiederholen. Beispielsweise könnte man hier einen Kran, einen Bagger, einen Reachstacker oder auch einen Radlader nennen, die alle gemein haben, zyklische Arbeitsschritte über einen langen Zeitraum hinweg durchzuführen.

Um die Funktionalität einer solchen Maschine über einen längeren Zeitraum hinweg gewährleisten zu können, sind typischerweise Wartungsintervalle einzuhalten, bei deren Nichtbeachtung die Wahrscheinlichkeit eines Ausfalls oder einer Beschädigung der Maschine bzw. eines Bauteils der Maschine stark ansteigt. Dies ist insbesondere dann von Nachteil, wenn eine solche Maschine in einen komplexen Arbeitsablauf eingebunden ist und der Ausfall von bereits einer Maschine Auswirkungen auf den gesamten komplexen Arbeitsablauf hat. Es ist daher besonders vorteilhaft, die erwartete Lebensdauer eines Bauteils einer Maschine zuverlässig abschätzen zu können, um an einem geeigneten Zeitpunkt eine Wartung oder einen Austausch eines Bauteils an der Maschine vornehmen zu können. Dies vermindert ungeplante Stillstandszeiten, sodass der komplexe Arbeitsablauf insgesamt schneller und mit höherer Verlässlichkeit abgeschlossen werden kann.

Ein solches verbessertes Verfahren zum Abschätzen einer erwarteten Lebensdauer eines Bauteils einer Maschine ist im Anspruch 1 definiert. Gemäß dem Verfahren werden Prozessdaten der Maschine, die bei Ausführung eines zyklischen Arbeitsschritts durch die Maschine erfasst werden, aufgezeichnet, die erfassten Daten an eine Datenbank übertragen, die in der Datenbank abgelegten Daten auf Ausfallmuster gemäß einem Ausfallmusterkatalog analysiert, um die erwartete Lebensdauer des Bauteils abzuschätzen, und eine Mitteilung bei Auffinden eines erkannten Ausfallmusters in den analysierten Daten ausgegeben.

Dadurch ist es möglich, die erwartete Lebensdauer bei Bauteilen in einer Maschine (beispielsweise einem Kran, einem Bagger, einem Radlader oder einem Reachstacker) abzuschätzen und so im weiteren Sinne die Grundlage für eine vollautomatisierte vorausschauende Wartung zu treffen. Für das Abschätzen der erwarteten Lebensdauer eines Bauteils werden die bei Durchführung eines zyklischen Arbeitsschritts anfallenden Prozessdaten der Maschine aufgezeichnet und analysiert.

Gemäß einer optionalen Fortbildung der Erfindung werden die Daten durchgängig über die gesamte Lebensdauer der Maschine bzw. des Bauteils hinweg an die Datenbank übertragen, wobei vorzugsweise die Daten in regelmäßigen Zeitabständen übermittelt werden. Durch das Vorhandensein von Prozessdaten, die über die gesamte bisherige Lebensdauer eines Bauteils reichen, lässt sich eine besonders fundierte Abschätzung über die zu erwartende Lebensdauer eines Bauteils treffen. Besonders im Hinblick auf das im Stand der Technik weit verbreitete Black Box-System, bei dem Daten nur für einen spezifisch eingeschränkten Zeitraum vor einem Ausfall im Nachhinein analysiert werden, können nach der Erfindung auch Effekte berücksichtigt werden, die zeitlich gesehen weit vor dem tatsächlichen Ausfall des Bauteils stattgefunden haben. Die durchgängige Chronologie der Prozessdaten in Bezug auf ein Bauteil einer Maschine ermöglicht eine präzise Abbildung des tatsächlichen Zustands des Bauteils.

Nach einer weiteren optionalen Modifikation der Erfindung wird in dem Verfahren ferner auch eine Meldung über einen Ausfall eines Bauteils der Maschine an die Datenbank übertragen. Durch die an die Datenbank übertragene Meldung über einen Ausfall eines Bauteils kann dann ein Rückschluss auf ein Ausfallmuster gezogen werden, was dem Ausfallmusterkatalog hinzugefügt wird.

So kann beispielsweise nach einem Feststellen eines Ausfalls auch eine weit vor dem Ausfallzeitpunkt aufgetretene Anomalie, wie ein Betreiben eines Bauteils oberhalb von zulässigen Grenzwerten, als für den Ausfall des Bauteils kausal angesehen werden.

Weiter kann vorgesehen sein, dass die Datenbank an einem von der Maschine entfernten Standort angeordnet ist und vorzugsweise eine dezentrale Datenbank oder eine Cloud-basierte Datenbank ist.

Nach einer weiteren Fortbildung der Erfindung werden die Prozessdaten mit unabhängigen, von der Maschine selbst generierten Meldungen kombiniert, wobei vorzugsweise die unabhängigen, von der Maschine generierten Meldungen hierzu an die Datenbank übertragen werden.

Dabei können die Prozessdaten und die von der Maschine selbst generierten Meldungen sowohl getrennt als auch in Kombination miteinander betrachtet und nach Mustern, Anomalien und Auffälligkeiten, vorzugsweise durch Cluster-Algorithmen und Machine Learning Algorithmen, durchsucht werden.

Vorzugsweise führt die Maschine eine Vielzahl von zyklischen Arbeitsschritten aus und die Prozessdaten umfassen einen Datensatz für jeden einzelnen der zyklischen Arbeitsschritte, wobei vorzugsweise der Datensatz mit Hilfe eines Algorithmus erzeugt wird.

Darüber hinaus kann nach der Erfindung vorgesehen sein, dass die Mitteilung bei Auffinden eines erkannten Ausfallmusters in den analysierten Daten eine Abschätzung über die erwartete Lebensdauer eines Bauteils enthält und/oder einen Wartungs- bzw. Austauschzeitpunkt des Bauteils vorschlägt. Dadurch kann sichergestellt werden, dass ein kurz vor dem Ausfall stehendes Bauteil rechtzeitig gewartet bzw. ausgewechselt wird. Dies kann eine ungeplante Unterbrechung der ein Bauteil verwendenden Maschine verhindern, sodass ein die Maschine nutzender Arbeitsablauf nicht ungeplant unterbrochen werden muss.

Zudem kann nach einer bevorzugten Ausführungsform der Erfindung vorgesehen sein, dass beim Analysieren der in der Datenbank abgelegten Daten die Prozessdaten mit den von der Maschine selbst generierten Meldungen gewichtet werden, um die Verlässlichkeit bei einer Abschätzung der erwarteten Lebensdauer zu erhöhen.

Vorzugsweise sind die von der Maschine selbst generierten Meldungen eispielsweise Überlastmeldungen von einem Kran, eine Meldung über einen leeren Kraftstoff oder Energietank, Probleme mit Sensoren, Defekte im System und/oder Statusmeldungen von Assistenzsystemen.

Gemäß einer Weiterbildung der vorliegenden Erfindung sind die Prozessdaten relative oder absolute Start- und Endpositionen eines Maschinenteils oder der Maschine in mindestens zwei Raumdimensionen, Geschwindigkeiten der verschiedenen Maschinenkomponenten, Lasten, maximale und minimale Leistung, Kraftstoff oder Energieverbrauch, Temperaturen einzelner Maschinenkomponenten, das Betriebsalter bzw. die Betriebsstunden eines Bauteils, die bisherige Lebensdauer eines Bauteils und/oder hydraulische Zustände in der Maschine.

Prozessdaten beschreiben den Zustand einer Maschine oder eines Bauteils wohingegen an den von der Maschine selbst generierten Meldungen eine erste Auswertung durch die Maschine vorgenommen worden ist.

Vorzugsweise wird die Analyse der in der Datenbank abgelegten Daten im laufenden Betrieb der Maschine ausgeführt.

Nach einer weiteren optionalen Modifikation der Erfindung wird die Analyse der in der Datenbank abgelegten Daten und/oder die Abschätzung einer erwarteten Lebensdauer eines Bauteils in Abhängigkeit der bisherigen Lebensdauer vorgenommen, wobei vorzugsweise nicht die gesamte bisherige Lebensdauer herangezogen wird, sondern nur diejenigen Zeiträume seit erstmaliger Inbetriebnahme, in denen das Bauteil aktiv in Benutzung war.

Gemäß einer Fortbildung der Erfindung wird die Analyse der in der Datenbank abgelegten Daten und/oder die Abschätzung einer erwarteten Lebensdauer eines Bauteils auf Grundlage des bisherigen Betriebsstunden eines Bauteils vorgenommen, die anhand der Prozessdaten und/oder den von der Maschine generierten Meldungen unterschiedlich gewichtet werden. So erfolgt dadurch eine Abschätzung der erwarteten Lebensdauer eines Bauteils nicht starr an den bereits verstrichenen Betriebsstunden, sondern es können beispielsweise Überlastmeldungen eines Bauteils zu einer insgesamt geringeren erwarteten Lebensdauer führen. So können Betriebsstunden, in denen das Bauteil in einem Überlastbereich betrieben worden ist, um einen bestimmten Faktor X bei der Abschätzung der erwarteten Lebensdauer stärker gewichtet werden.

Die Erfindung betrifft zudem ein Verfahren nach einem der vorhergehenden Ansprüche, , wobei die Maschine ein Kran, beispielsweise ein Hafenmobilkran, eine Baumaschine, beispielsweise ein Bagger, ein Gerät für Bohr- und Gründungsarbeit, beispielsweise eine Ramme oder ein Fluorförderfahrzeug, beispielsweise ein Reachstacker, ist.

Weitere Merkmale, Vorteile und Details der Erfindung werden anhand der nachfolgend beschriebenen Figuren ersichtlich. Dabei zeigen:
- Fig. 1:: ein Diagramm zur Veranschaulichung des erfindungsgemäßen Verfahrens,
- Fig. 2:: eine Abbildung zur Erläuterung der Erfindung an einem konrekten Beispiel,
- Fig. 3:: eine weitere Abbildung zur Erläuterung der Erfindung anhand eines konkreten Beispiels, und
- Fig. 4:: ein Diagramm zur Visualisierung der vorliegenden Erfindung anhand eines Beispiels von Seilrollen.

Die grundlegende Idee der Erfindung liegt in der statistischen Berechnung von Lebensdauerparametern bei Bauteilen in einer Maschine, die als Grundlage für eine vollautomatisierte vorausschauende Wartung genutzt werden können. Die Basis hierfür ist eine Kombination von verschiedenen Datenquellen, wie den Betriebsstunden und Servicedaten, die Aufschluss über Ausfälle geben, den Prozessdaten aus Maschinenzyklen, die in Kombination mit von der Maschine erzeugten Nachrichten nach dem Ausfall eines Bauteils Rückschlüsse über mögliche Indikatoren solcher Ausfälle zulassen. Dabei beschreiben Prozessdaten Parameter eines einzelnen Arbeitszyklus der Maschine, beispielsweise die Position beim Aufheben einer Last, die Masse der Last, die durchschnittliche Öltemperatur während dem Verfahren der Last, die Zyklusdauer o.Ä. Von der Maschine erzeugte Nachrichten sind dabei beispielsweise Informationen über Überlasten oder Probleme in der Elektronik. Die Kombination von Prozessdaten mit den von der Maschine erzeugten Nachrichten erlaubt es, einzelnen Prozessen der Maschine erweiterte Details hinzuzufügen, sodass nach Ausfall eines Bauteils Muster erkannt werden können, die für den Ausfall ursächlich sind. Ein so erkanntes Muster lässt sich im weiteren Verfahren dazu nutzen einen ähnlich gelagerten Ausfall bei anderen Geräten frühzeitig zu erkennen.

Für einen Großteil von Maschinen ist es typisch, dass ihre Arbeit in immer wiederkehrenden Zyklen verrichtet wird. Für die Erfassung der zusammenfassenden Prozessdaten werden im laufenden Betrieb die Maschinenzyklen durch einen Algorithmus ermittelt und für jeden einzelnen Zyklus eine Kollektion aller relevanten Daten errechnet. Diese einen Arbeitszyklus charakterisierenden Prozessdaten können u.a. absolute und/oder relative Start- und Endpositionen in allen Dimensionen, Geschwindigkeiten der verschiedenen Maschinenkomponenten, Lasten, maximale und minimale Leistung, Verbrauch, Temperaturen der einzelnen Maschinenkomponenten, hydraulische Zustände und/oder Materialstresszyklen umfassen. Am Ende eines zyklischen Arbeitsschritts werden diese Daten an eine zentrale Stelle wie eine Datenbank oder einen Datenbankserver übermittelt.

Anhand eines Beispiels eines Hafenmobilkrans wird der oben beschriebene Ablauf erläutert. Dabei umfassen die gesammelten Daten vom Entladen eines Schiffes durch einen Hafenmobilkran beispielsweise die Be- und Entladeposition sowie die transportierte Last für jeden Zyklus. Mit Hilfe einer Cluster-Analyse werden dabei anhand der Positionsdaten die Koordinaten und Dimensionen der verschiedenen Be- und Entladeobjekte ermittelt, die beispielsweise ein Hatch, ein Hopper oder ein Haufen sein können. Die charakteristische Ausdehnung und die Position der verschiedenen Be- und Entladepositionen werden hierbei mit Hypothesen verglichen, um eine entsprechende Zuordnung zu den entsprechenden Be- und Entladeobjekten (Hatch, Hopper oder Haufen) durchzuführen. Dadurch ist durch eine sehr geringe Anzahl von Daten ein kompletter Arbeitstag eines Hafenmobilkrans rekonstruierbar.

Darüber hinaus werden von diesen Prozessdaten unabhängige Meldungen der Maschine aufgezeichnet, die auf die gleiche zentrale Stelle (Datenbank) übertragen und vorzugsweise mit den Prozessdaten synchronisiert werden. Diese von der Maschine generierten Meldungen können beispielsweise Überlastmeldungen einer Maschine, eine Meldung über einen leeren Tank, Probleme mit Sensoren, Defekte im System und/oder Statusmeldungen von Assistenzsystemen sein. Diese weiteren Informationen können nach sequentiellen Mustern oder Anomalien durchsucht werden, um zusätzliche Rückschlüsse zuzulassen. Zudem werden die von der Maschine generierten Meldungen bzw. diese Informationen zu den Prozessdaten hinzugefügt.

Darüber hinaus liegen für einzelne Bauteile der Maschine Schadensprofile vor, die nach einem Ausfall eines Bauteils erstellt worden sind. Für das Erstellen werden die Prozessdaten der Maschinenzyklen und die Maschinenmeldungen sowohl getrennt als auch in Kombination miteinander betrachtet und nach Mustern, Anomalien und Auffälligkeiten durchsucht. Das Durchsuchen kann dabei über Cluster-Algorithmen und Machine Learning Algorithmen erfolgen.

Das Resultat dieser Berechnungen sind einerseits die statistisch ermittelten Lebensparameter eines Bauteiltyps sowie eine Sammlung an Ausfallmustern (Schadensprofilen), die bei Ausfällen von Bauteilen aufgefunden wurden. Diese Ausfallmuster können einerseits sequentielle Muster von Maschinenmeldungen darstellen aber auch Abweichungen in typischen Prozessdaten in Maschinenzyklen sein.

Das Obige wird erneut am Beispiel eines Hafenmobilkrans erläutert. Ist beispielweise eine Seilwinde in einem Hafenmobilkran nach X Betriebsstunden ausgefallen, so erlaubt es die kontinuierliche Aufzeichnung der Daten nun nicht nur die Betriebsstunden des Krans als Grundlage aufzugreifen, sondern durch die gesammelten Daten der zyklischen Arbeitsschritte des Hafenmobilkrans diese Betriebsstunden auf die eigentlich relevante Zeit zu reduzieren, in der die Seilwinde wirklich beansprucht worden ist. Durch die erweiterten Daten (Prozessdaten oder von der Maschine generierte Meldungen) lassen sich einzelne zyklische Arbeitsschritte stärker gewichten oder alternativ dazu, bei Arbeiten ohne Last, schwächer gewichten. Aus den X Betriebsstunden des Krans lassen sich die relevanten Y Betriebsstunden der Seilwinde rekonstruieren wodurch sich so mit Hilfe der kontinuierlichen Beobachtung dieser Y Betriebsstunden der Seilwinde die Vorhersage eines baldigen Ausfalls präziser ermitteln lässt.

Soweit die Datenbank für einen einzelnen Bauteiltyp eine ausreichend große Statistik beinhaltet, kann in weiterer Folge nach den oben gefunden Ausfallmustern und Auffälligkeiten im laufenden Betrieb gesucht werden, um einen drohenden Bauteilausfall rechtzeitig zu erkennen und entsprechende Gegenmaßnahmen frühzeitig zu ergreifen.

Wurde beispielsweise bei einem Hafenmobilkran nach einem Ausfall eines Bauteils festgestellt, dass ab einer gewissen Anzahl von Betriebsstunden eine Kombination von Maschienenmeldungen innerhalb eines gewissen Arbeitszyklus mit großer Drehgeschwindigkeit und einer großen Last sehr häufig zu einem baldigen Ausfall des Bauteils führt, wird in weitere Folge in allen im Betrieb befindlichen Kranen kontinuierlich nach genau diesem Ausfallmuster gesucht. Bei Auffinden dieses Ausfallmusters wird eine Reparatur oder eine Wartung des kritischen Bauteils eingeleitet. Für eine solche Methodik werden typischerweise die Prozessdaten aus Arbeitszyklen, synchronisierte Maschinenmeldungen, Cluster-Algorithmik zur Identifikation der Arbeitszyklen und Mustererkennung oder Machine Learning Algorithmen verwendet.

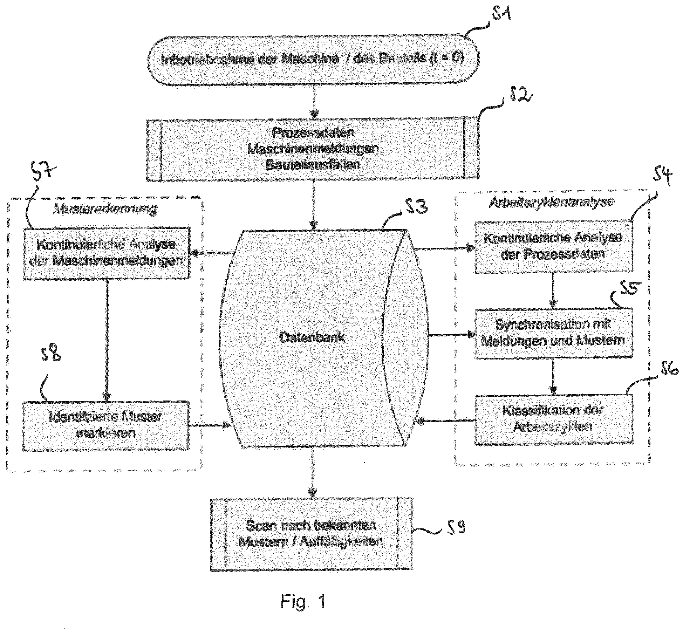

Fig. 1 zeigt ein Ablaufdiagramm des erfindungsgemäßen Verfahrens. S1 beschreibt die Inbetriebnahme der Maschine bzw. des Bauteils. Nachfolgend werden kontinuierlich über die gesamte Lebensdauer der Maschine bzw. des Bauteils Prozessdaten, Maschinenmeldungen und Bauteilausfälle im Schritt S2 an die Datenbank gesandt. Diese führt in S4 eine kontinuierliche Analyse der Prozessdaten aus und synchronisiert diese mit von der Maschine selbst generierten Meldungen und Mustern S5. Im Schritt S6 werden die verschiedenen durch die Maschine ausgeführten Arbeitszyklen klassifiziert.

Darüber hinaus werden die Maschinenmeldungen einer kontinuierlichen Analyse unterzogen S7 und dabei entdeckte identifizierte Muster markiert S8.

Zudem wird nach bekannten Mustern/Auffälligkeiten in den in der Datenbank abgelegten Daten gesucht, um einen bevorstehenden Ausfall eines Bauteils möglichst frühzeitig zu erkennen.

Folgendes Beispiel beschreibt, wie ein Hafenmobilkran in einem Hafen ein Schiff in einen Hopper und auf einen danebenliegenden Haufen entlädt, und die kombinierte Information der Prozessdaten als auch der Maschinendaten für vorausschauende Wartung verwendet werden.

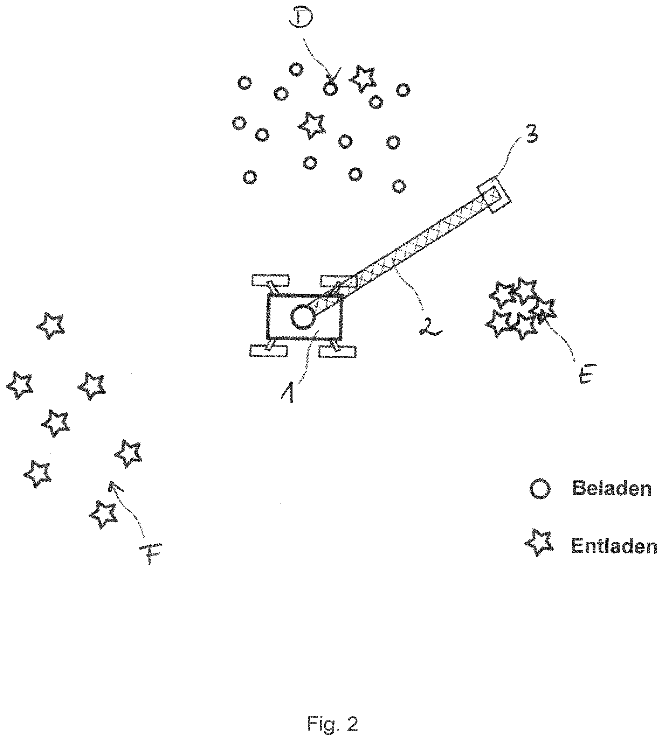

Wie in Fig. 2 dargestellt, steht ein Hafenmobilkran (1) an einer bestimmten Stelle. Mit dem Ausleger (2) und einer angehängten Schaufel (3) entlädt der Kran ein Schiff. Mittels Zykluserkennung lassen sich je Zyklus gewisse Daten sammeln, beispielsweise die Koordinaten in 2 Dimensionen, an der die Schaufel befüllt (Kreise) und entleert (Sterne) werden. In Fig. 2 erkennt man mit dem Auge bereits drei grobe Gebiete: Region D, in der hauptsächlich die Schaufel befüllt wird, Region E, in der der stark lokalisiert die Schaufel immer entladen wird, und Region F, in der mit größerer Streuung die Schaufel immer entladen wird. Des Weiteren werden Maschinendaten aufgezeichnet, die einerseits nach Mustern durchsucht werden als auch mit den Prozessdaten synchronisiert werden. Zuletzt werden auch die Ausfallszeiten von Maschinenkomponenten erfasst, hier beispielsweise der Zeitpunkt, an dem eine Seilrolle ausfällt.

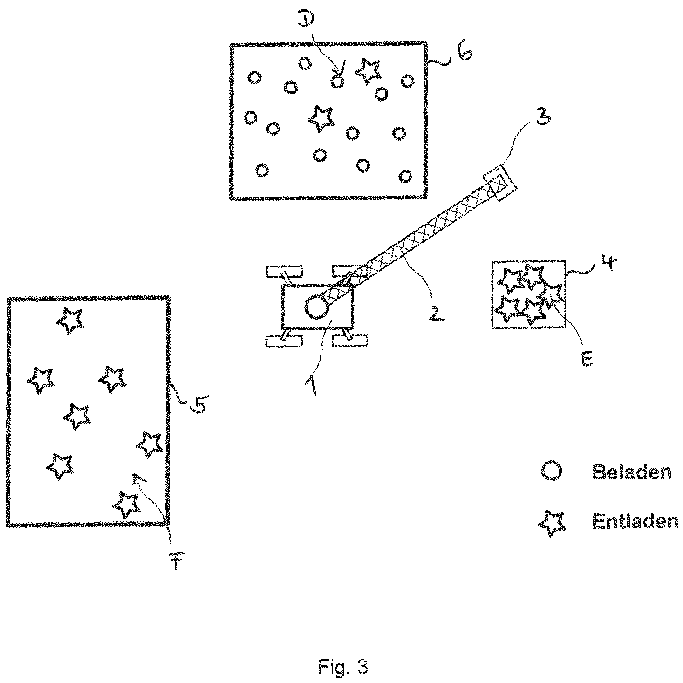

Durch die Analyse der vorhandenen Prozessdaten (z.B. durch eine Clusterung der bekannten Positionen mittels eines herkömmlichen Clusteralgorithmus) wird in weitere Folge ermittelt, welche Häufungen von Be- und Entladepunkten welchen realen Objekten zugewiesen werden können. So kann, wie in Fig. 3 dargestellt, durch die kleine Streuung der Entladepunkte in E festgestellt werden, dass es sich bei dem realen Objekt sehr wahrscheinlich um einen Hopper handeln muss, während die große Streuung bei F eher auf einen Haufen schließen lässt. Die vielen Beladepunkte in D lassen auf die Position des Schiffes schließen.

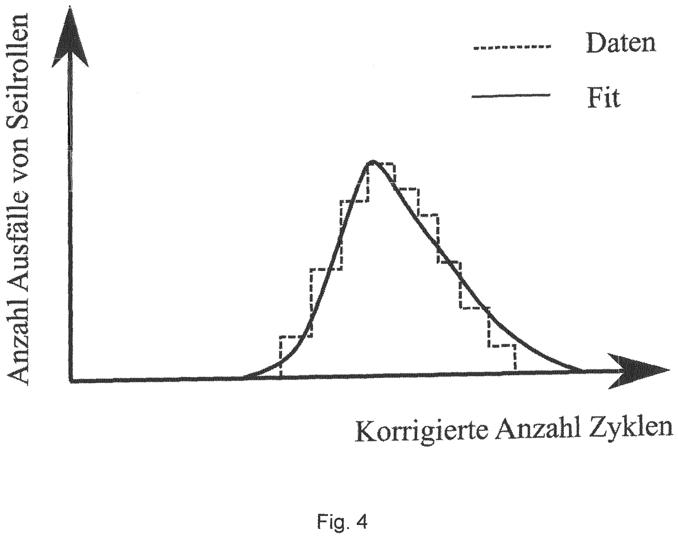

Diese Informationen werden nun für viele Hafenmobilkrane laufend aufgezeichnet. Damit ist bekannt, wie viele Umschläge bei welchen Lasten Hafenmobilkrane während des Betriebs durchführen, und wie oft dabei Überlastmeldungen verzeichnet werden. In diesem Beispiel wird in weiterer Folge durch eine sequentielle Mustererkennung festgestellt, dass bei einer großen Häufigkeit von Überlastmeldungen die Seilrollen bei Hafenmobilkranen früher ausfallen. Durch einen Fit der Daten kann beispielsweise festgestellt werden, dass eine Überlastmeldung in etwa dieselbe Belastung für eine Seilrolle darstellt wie 30 reguläre Arbeitszyklen (vgl. Fig. 4). Dieses Wissen wird nun weiter verarbeitet, um die Ausfallswahrscheinlichkeit einer Seilrolle nicht nur in Abhängigkeit ihrer bisherigen Lebensdauer zu berechnen, sondern in Abhängigkeit einer korrigierten, gewichteten Anzahl von Arbeitszyklen.

Nachdem ausreichend viele Prozessdaten, Maschinendaten und Ausfallsdaten gesammelt wurden, lässt sich in weiterer Folge berechnen, in welchem Zustand sich die Seilrollen bei Hafenmobilkranen aktuell befinden: wie viele Zyklen wurden bereits absolviert, wie viele Zyklen wird die Seilrolle mit welcher Wahrscheinlichkeit noch überleben, und wie stark wird durch Überlasten der prognostizierte Ausfall beeinflusst.

## Patentansprüche

1. Verfahren zum Abschätzen einer erwarteten Lebensdauer eines Bauteils einer Maschine, wobei in dem Verfahren:
Prozessdaten der Maschine, die beim Ausführen eines zyklischen Arbeitsschritts durch die Maschine erfasst werden, aufgezeichnet werden,
die erfassten Daten an eine Datenbank übertragen werden,
die in der Datenbank abgelegten Daten auf Ausfallmuster gemäß einem Ausfallmusterkatalog analysiert werden, um die erwartete Lebensdauer des Bauteils abzuschätzen, und
eine Mitteilung bei Auffinden eines erkannten Ausfallmusters in den analysierten Daten ausgegeben wird.

2. Verfahren nach Anspruch 1, wobei die Daten durchgängig über die gesamte Lebensdauer der Maschine oder des Bauteils hinweg an die Datenbank übertragen werden, und wobei vorzugsweise die Daten in regelmäßigen Zeitabständen übertragen werden.

3. Verfahren nach einem der vorhergehenden Ansprüche, wobei ferner auch eine Meldung über einen Ausfall eines Bauteils der Maschine an die Datenbank übertragen wird, und vorzugsweise durch die Meldung über einen Ausfall eines Bauteils ein Rückschluss auf ein Ausfallmuster gezogen und der Ausfallmusterkatalog um dieses Ausfallmuster erweitert wird.

4. Verfahren nach einem der vorhergehenden Ansprüche, wobei die Datenbank an einem von der Maschine entfernten Standort angeordnet ist, und vorzugsweise eine dezentrale Datenbank oder eine cloudbasierte Datenbank ist.

5. Verfahren nach einem der vorhergehenden Ansprüche, wobei die Prozessdaten mit unabhängigen, von der Maschine selbst generierten Meldungen kombiniert werden, wobei vorzugsweise die unabhängigen, von der Maschine generierten Meldungen hierzu an die Datenbank übertragen werden.

6. Verfahren nach Anspruch 5, wobei die Prozessdaten und die von der Maschine selbst generierten Meldungen sowohl getrennt als auch in Kombination miteinander betrachtet und nach Mustern, Anomalien und Auffälligkeiten, vorzugsweise durch Clusteralgorithmen und Machine-Learning-Algorithmen, durchsucht werden.

7. Verfahren nach einem der vorhergehenden Ansprüche, wobei die Maschine eine Vielzahl von zyklischen Arbeitsschritten ausführt und die Prozessdaten einen Datensatz für jeden einzelnen der zyklischen Arbeitsschritte umfasst, wobei vorzugsweise der Datensatz mit Hilfe eines Algorithmus erzeugt wird.

8. Verfahren nach einem der vorhergehenden Ansprüche, wobei die Mitteilung bei Auffinden eines erkannten Ausfallmusters in den analysierten Daten eine Abschätzung über die erwartete Lebensdauer eines Bauteils enthält und/oder einen Wartungs- bzw. Austauschzeitpunkt des Bauteils vorschlägt.

9. Verfahren nach einem der vorhergehenden Ansprüche, wobei beim Analysieren der in der Datenbank abgelegten Daten die Prozessdaten mit den von der Maschine selbst generierten Meldungen gewichtet werden, um die Verlässlichkeit bei einer Abschätzung der erwarteten Lebensdauer zu erhöhen.

10. Verfahren nach einem der vorhergehenden Ansprüche, wobei die von der Maschine selbst generierten Meldungen beispielsweise Überlastmeldungen von einem Kran, eine Meldung über einen leeren Kraftstoff- oder Energietank, Probleme mit Sensoren, Defekte im System und/oder Statusmeldungen von Assistenzsystemen sind.

11. Verfahren nach einem der vorhergehenden Ansprüche, wobei die Prozessdaten Parameter eines einzelnen zyklischen Arbeitsschritts sind, insbesondere relative oder absolute Start- und Endpositionen eines Maschinenteils oder der Maschine in allen Raumdimensionen, Geschwindigkeiten der verschiedenen Maschinenkomponenten, Lasten, maximale und minimale Leistung, Kraftstoff- oder Energieverbrauch, Temperaturen einzelner Maschinenkomponenten, das Betriebsalter bzw. die Betriebsstunden eines Bauteils, die bisherige Lebensdauer eines Bauteils und/oder hydraulische Zustände in der Maschine .

12. Verfahren nach einem der vorhergehenden Ansprüche, wobei die Analyse der in der Datenbank abgelegten Daten im laufenden Betrieb der Maschine ausgeführt wird.

13. Verfahren nach einem der vorhergehenden Ansprüche, wobei die Analyse der in der Datenbank abgelegten Daten und/oder die Abschätzung einer erwarteten Lebensdauer eines Bauteils in Abhängigkeit der bisherigen Lebensdauer vorgenommen wird, wobei vorzugsweise nicht die gesamte bisherige Lebensdauer herangezogen wird, sondern nur diejenigen Zeiträume seit erstmaliger Inbetriebnahme, in denen das Bauteil aktiv in Benutzung war.

14. Verfahren nach einem der vorhergehenden Ansprüche, wobei die Analyse der in der Datenbank abgelegten Daten und/oder die Abschätzung einer erwarteten Lebensdauer eines Bauteils auf Grundlage der bisherigen Betriebsstunden eines Bauteils vorgenommen wird, die anhand der Prozessdaten und/oder den von der Maschine generierten Meldungen unterschiedlich gewichtet werden.

15. Verfahren nach einem der vorhergehenden Ansprüche, wobei die Maschine ein Kran, beispielsweise ein Hafenmobilkran, eine Baumaschine, beispielsweise ein Bagger, ein Gerät für Bohr- und Gründungsarbeit, beispielsweise eine Ramme oder ein Fluorförderfahrzeug, beispielsweise ein Reachstacker, ist.
